# EUROPÄISCHE PATENTSCHRIFT

(11) **EP 3 406 672 B1**
(45) Veröffentlichungstag und Bekanntmachung des Hinweises auf die Patenterteilung: **22.01.2020**
(21) Anmeldenummer: 18171302.5
(22) Anmeldetag: 08.05.2018
(51) Int. Cl.: C09C 1/30, B22C 1/18, B22C 9/00, C08K 3/36, C08K 3/40, C08K 9/02, C09C 3/04, C09C 3/06

(54) **COMPOSIT-PARTIKEL MIT HYDROPHILEN UND HYDROPHOBEN OBERFLÄCHENBESCHICHTUNGEN**
COMPOSITE PARTICLE COMPRISING HYDROPHILIC AND HYDROPHOBIC SURFACE COATINGS
PARTICULES COMPOSITES À REVÊTEMENTS DE SURFACE HYDROPHILES ET HYDROPHOBES

(30) Priorität: 26.05.2017 DE 102017111515
(43) Veröffentlichungstag der Anmeldung: 28.11.2018
(73) Patentinhaber: Gebrüder Dorfner GmbH & Co. Kaolin- und Kristallquarzsand-Werke KG, 92242 Hirschau (DE)
(72) Erfinder: Flierl, Michael, 92242 Hirschau (DE); Süß, Marco, 92439 Bodenwöhr (DE); Kräuter, Reinhard, 92237 Sulzbach-Rosenberg (DE)
(74) Vertreter: Hannke, Christian

(56) Entgegenhaltungen:
- EP-A1- 1 820 582
- EP-A1- 2 937 160
- DE-A1-102014 004 914
- US-A- 4 316 744

## Beschreibung

Die vorliegende Erfindung betrifft Composit-Partikel umfassend einen Trägerpartikel und eine mindestens partielle Oberflächenbeschichtung. Weiterhin betrifft die Erfindung ein Verfahren zur Herstellung von Composit-Partikeln. Außerdem betrifft die Erfindung Mineralguss- oder Verbundwerkstücke, die derartige Composit-Partikel enthalten.

Composit-Partikel sind aus dem Stand der Technik bekannt. Üblicherweise setzen sich Composit-Partikel aus einem Trägerpartikel und einer Oberflächenbeschichtung zusammen. Durch die Oberflächenbeschichtung kann dem Composit-Partikel eine gewünschte Eigenschaft verliehen werden. Aufgrund der üblicherweise vergleichsweise günstigen Trägerpartikels können so Partikel bereitgestellt werden, die bei vergleichsweise geringen Kosten eine gewünschte Materialeigenschaft mitbringen. Den Trägerpartikeln können durch entsprechende Oberflächenbeschichtungen beispielsweise gezielt gewünschte magnetische oder optische Eigenschaften verliehen werden. Außerdem ist es möglich, den Partikeln gewünschte andere Materialeigenschaften, wie zum Beispiel eine hohe Härte oder Stabilität zu verleihen. Je nach Oberflächenbeschichtung können auch chemische Eigenschaften, die Temperaturbeständigkeit, die Abriebfestigkeit, die Farbe, die Partikelgröße oder andere Eigenschaften eingestellt werden. Durch die zahlreichen Einstellungsmöglichkeiten der Eigenschaften der Composit-Partikel finden derartige Partikel in vielen Bereichen Anwendung. Lediglich beispielsweise sind hier chemische, metallurgische, pharmazeutische und optische Anwendungen genannt. Von besonderem Interesse sind Anwendungen in Verbundwerkstoffen und/oder Farben.

In diesem Zusammenhang beschreibt DE 10 2014 004914 A1 Composit-Partikel aus Formsandkörnern, die eine Oberflächenbeschichtung aus einem (Wasser-) Glas umfassen. Diese Composit-Partikel können bei Einsatz im Formguss eine Blattrippenbildung verhindern oder zumindest reduzieren.

Die Anwendung von bisher bekannten Composit-Partikeln ist jedoch beschränkt. Insbesondere wenn gewünscht ist, dass die Composit-Partikel in einer Matrix eingebettet werden sollen, ist der Fachmann bei der Auswahl der Oberflächenbeschichtung eingeschränkt, da er neben den gewünschten Eigenschaften auch die ausreichende Dispergierbarkeit in der Kunstharzmatrix gewährleisten muss.

Außerdem werden viele Composit-Partikel beim Einwirken hoher Scherkräfte zumindest oberflächlich beschädigt, sodass sich beispielsweise Pigmentpartikel lösen und die Farbe nach der Scherkraftbeaufschlagung nicht mehr dem gewünschten Farbton entspricht.

Der vorliegenden Erfindung liegt daher die Aufgabe zugrunde, einen Composit-Partikel bereitzustellen, welcher auch nach Einwirkung hoher Scherkräfte einen gewünschten optischen Effekt aufweist und welcher gleichzeitig auch gut dispergierbar in einer Harzmatrix ist.

Weiterhin liegt der Erfindung die Aufgabe zugrunde, ein Verfahren zum Herstellen von Composit-Partikeln bereitzustellen, welche die oben genannten Nachteile nicht aufweisen.

Weiterhin ist es Aufgabe der vorliegenden Erfindung, einen Mineralguss- oder Verbundwerkstoff bereitzustellen, in welchem Composit-Partikel homogen verteilt vorliegen.

Überraschenderweise konnte gezeigt werden, dass diese Aufgaben durch einen Composit-Partikel gemäß Anspruch 1, ein Verfahren zur Herstellung von Composit-Partikeln gemäß Anspruch 8 und ein Mineralguss- oder Verbundwerkstück gemäß Anspruch 10 gelöst werden kann.

Ein wesentlicher Aspekt der vorliegenden Erfindung ist ein Composit-Partikel, umfassend einen Trägerpartikel und eine mindestens partielle Oberflächenbeschichtung. Ein solcher Trägerpartikel zeichnet sich insbesondere dadurch aus, dass der Trägerpartikel ein Quarz und ein Schichtsilikat umfasst und die Oberfläche des Composit-Partikels mindestens einen hydrophilen und mindestens einen hydrophoben Bereich aufweist. Insbesondere das gleichzeitige Vorliegen eines hydrophilen und eines hydrophoben Bereichs auf der Oberfläche eines solchen Composit-Partikels hat sich als vorteilhaft hinsichtlich der Dispergierbarkeit in einer Kunstharzmatrix gezeigt.

Bevorzugt bildet oberflächlich angeordnetes Schichtsilikat die hydrophoben Oberflächenbereiche des Trägerpartikels, wohingegen Quarz hydrophile Oberflächenbereiche des Trägerpartikels bildet. Durch diese unterschiedlichen Oberflächeneigenschaften ist es möglich, Verschiedene Bereiche der Trägerpartikeloberfläche unterschiedlich zu beschichten. Beispielsweise können Metalle gezielt auf hydrophobe Oberflächenbereiche abgeschieden werden, so dass in diesen Bereichen eine Totalreflexion eintreffenden Lichts erfolgen kann. Eventuell ist für die gezielte Beschichtung der hydrophoben Oberflächenbereiche eine vorherige Maskierung hydrophiler Oberflächenbereiche notwendig.

Weiterhin ist es in einer bevorzugten Ausführungsform möglich, verschiedene Oberflächenbereiche des Composit-Partikels selektiv zu Färben. Beispielsweise können einer Beschichtungsmasse, die selektiv hydrophile Oberflächenbereiche des Trägerpartikels benetzt und anschließend auf diesen aushärtet oder auf diesen gebunden werden kann, Pigmente zugesetzt sein. Diese Pigmente sorgen dafür, dass lediglich in den (in diesem Fall hydrophilen) Bereichen, eine Oberflächeneinfärbung vorgenommen wird. Grundsätzlich wären auch andere Unterschiede als die oben genannten Unterschiede in Reflexionsverhalten und Farbe in den Oberflächenbeschichtungen der verschiedenen Oberflächenbereiche des Trägerpartikels denkbar.

Bevorzugt wird als hydrophiler bzw. hydrophober Bereich ein zusammenhängender Oberflächenbereich eines Composit-Partikels verstanden. Weiter bevorzugt umfasst jeder dieser zusammenhängenden Bereiche mindestens 5 %, bevorzugt 10 %, weiter bevorzugt 20 % der Oberfläche des Composit-Partikels. Durch diese vergleichsweise großen zusammenhängenden Bereiche mit der jeweiligen Eigenschaft kann gewährleistet werden, dass diese Eigenschaft auch im Verbundwerkstoff auftritt. Beispielsweise kann in einer Kunstharzmatrix durch diese vergleichsweise großen Bereiche gewährleistet sein, dass einerseits die Dispergierbarkeit gewährleistet ist, andererseits jedoch auch eine ausreichend große Grenzschicht ausgebildet wird, die lediglich minimale Wechselwirkungen zwischen der Composit-Partikeloberfläche und der Matrix aufweist, wodurch in diesem Bereich besondere optische Eigenschaften aufgrund der Lichtreflektion an der Grenzfläche auftreten.

Bei den Trägerpartikeln handelt es sich bevorzugt um einen natürlichen Rohstoff. Besonders bevorzugt ist, wenn Quarz und Schichtsilikat miteinander zumindest lokal verwachsen sind. Bei derartigen miteinander verwachsenen Trägermaterialien hat sich gezeigt, dass die Ausbildung von lokalen hydrophilen und hydrophoben Bereichen auf deren Oberfläche besonders einfach zu realisieren ist.

In einer besonders bevorzugten Ausführungsform zeichnen sich die Composit-Partikel dadurch aus, dass der hydrophile Bereich der Oberfläche des Composit-Partikels eine hydrophile Oberflächenbeschichtung aufweist, die ein Wasserglas oder dessen Folgeprodukt umfasst. Bei einem Wasserglas handelt es sich bevorzugt um ein Alkaliwasserglas. Weiter bevorzugt handelt es sich um ein Natrium- oder Kaliumwasserglas, da diese besonders kostengünstig sind. Es hat sich gezeigt, dass eine lokale Beschichtung mit Wasserglas nicht nur dazu führt, hydrophile Oberflächenbereiche bereitzustellen, sondern auch gewährleistet, dass ein derartiger Composit-Partikel hohe Scherkräfte überstehen kann.

In einer bevorzugten Ausführungsform weist das Schichtsilikat eine Zusammensetzung des Typs

Dodₙ Hex₂₋₃ [Tet₄ O₁₀] X₂ • m H₂O

auf, wobei "Dod" 12-fach koordinierte Kationen sind, "Hex" 6-fach koordinierte Kationen sind, "Tet" 4-fach koordinierte Kationen sind, "X" Anionen sind, "n" im Bereich von 0,35 bis 1 liegt und "m" im Bereich von 0 bis 24 liegt.

Bevorzugt handelt es sich bei "Dod" um Kationen die ausgewählt sind aus einer Gruppe, die K⁺, Na⁺ und Ca²⁺ umfasst. In einer besonders bevorzugten Ausführungsform ist "Dod" K⁺.

"n" liegt im Bereich von 0,35 bis 1, Bevorzugt liegt das Produkt aus "n" mal der Ladung von "Dod" im Bereich von 0,7 bis 1. Besonders bevorzugt ist das Produkt aus "n" mal der Ladung von "Dod" etwa gleich 1, weiter bevorzugt genau gleich 1.

Bevorzugt handelt es sich bei "Hex" um Kationen die ausgewählt sind aus einer Gruppe, die Li⁺, Mg²⁺, Feⁱ⁺ (weiter bevorzugt als Fe²⁺), Mn²⁺ und Al³⁺ umfasst. In einer besonders bevorzugten Ausführungsform ist "Hex" ausgewählt aus einer Gruppe, die Mg²⁺, Fe²⁺ und Al³⁺ umfasst.

Bevorzugt handelt es sich bei "Tet" um Kationen die ausgewählt sind aus einer Gruppe, die Si⁴⁺, Feⁱ⁺ (weiter bevorzugt als Fe³⁺) und Al³⁺ umfasst. In einer besonders bevorzugten Ausführungsform ist "Tet" Si⁴⁺ und/oder Al³⁺.

Bevorzugt handelt es sich bei "X" um Anionen die ausgewählt sind aus einer Gruppe, die OH⁻, Cl⁻ und F⁻ umfasst. In einer besonders bevorzugten Ausführungsform ist "X" F⁻ oder OH⁻.

Die Anwesenheit von Kristallwasser ist in den meisten Fällen für die Eignung eines Schichtsilikats für die vorliegende Erfindung unkritisch, so dass "m" über einen weiten Bereich variiert sein kann. Als bevorzugt hat sich jedoch herausgestellt, wenn "m" vergleichsweise geringe Werte einnimmt, da bei einer thermischen Behandlung weniger Kristallwasser austritt und die Schichtstruktur weniger stark gestört wird. In einer bevorzugten Ausführungsform ist "m" daher im Bereich von 0-12, in einer weiter bevorzugten Ausführungsform ≤ 8, besonders bevorzugt ≤ 4. Als besonders geeignet haben sich Schichtsilikate herausgestellt die kein Kristallwasser enthalten. Daher ist "m" besonders bevorzugt gleich 0.

In einer weiteren bevorzugten Ausführungsform zeichnet sich der Composit-Partikel dadurch aus, dass er eine Korngröße (D₅₀, gemessen mittels Silikat) zwischen 10 und 1.000 µm, bevorzugt zwischen 25 und 500 µm, besonders bevorzugt zwischen 50 und 200 µm aufweist. Es hat sich gezeigt, dass diese Korngrößen besonders geeignet sind, um den Verbundwerkstoffen oder Mineralgussstücken sowohl gleichmäßig verteilt eingebracht werden zu können, als auch die gewünschten optischen Effekte zeigen.

In einer bevorzugten Ausführungsform liegt die hydrophile Oberflächenbeschichtung in einem Massenanteil von unter 10 %, bevorzugt unter 8 % und besonders bevorzugt zwischen 0,1 und 5 % bezogen auf die Gesamtmasse des Composit-Partikels vor. Diese Anteile haben sich als ausreichend hoch erwiesen, um die erwünschten Eigenschaften hinsichtlich der Scherbeständigkeit, der Stabilität und der Dispergierbarkeit der Composit-Partikel zu gewährleisten. Andererseits liegen diese Anteile in einem Bereich, der sich einerseits mit bekannten Technologien einfach aufbringen lässt und auch im Hinblick auf die vergleichsweise hohen Kosten dieser Oberflächenbeschichtung wirtschaftlich vertretbar ist. Soweit im Folgenden Prozentangaben nicht anders definiert werden, sollen diese jeweils als Massenprozent bezogen auf die Gesamtmasse des Composit-Partikels verstanden werden. Wie oben beschrieben, liegt bevorzugt die hydrophile Bindemittel- und/oder Wasserglasbeschichtung auf den hydrophilen Bereichen des Trägerpartikels vor.

In einer bevorzugten Ausführungsform umfasst die Oberflächenbeschichtung ein Pigment. Dieses kann beispielsweise in die Oberflächenbeschichtung eingebettet sein. Insbesondere bei Wasserglas als Oberflächenbeschichtung lassen sich Pigmente vergleichsweise einfach in eine Oberflächenbeschichtung einbetten. Durch ein Pigment kann ein bestimmter Farbeffekt des Composit-Partikels hervorgerufen werden. Da Pigmente in der Regel vergleichsweise teuer sind, liegt der Massenanteil bevorzugt bei unter 5 %, weiter bevorzugt bei unter 4 % und besonders bevorzugt im Bereich zwischen 0,01 und 3 % bezogen auf die Gesamtmasse des Composit-Partikels.

Diese Massenanteile gewährleisten hervorragende Farbeigenschaften bei vergleichsweise geringen Kosten.

Ein weiterer wesentlicher Aspekt der vorliegenden Erfindung ist ein Verfahren zur Herstellung von Composit-Partikeln, deren Oberfläche mindestens einen hydrophilen und mindestens einen hydrophoben Bereich aufweist. Dieses erfindungsgemäße Verfahren umfasst die Schritte
a) Bereitstellen der Trägerpartikel,
b) Einführen der Trägerpartikel in eine Mischeinrichtung,
c) Beaufschlagen der Trägerpartikel mit einer Beschichtungszusammensetzung,
d) Beschichten der Trägerpartikel mit der Beschichtungszusammensetzung durch Vermischen der Trägerpartikel mit der Beschichtungszusammensetzung und der Scherenergieeintrag,
e) Temperaturbeaufschlagung der beschichteten Trägerpartikel.
Dieses Verfahren ermöglicht eine besonders einfache und effiziente Herstellung der Composit-Partikel.

In einer bevorzugten Verfahrensvariante werden die Trägerpartikel in einer ausgewählten Korngröße bereitgestellt. Die Korngröße liegt in einer besonders bevorzugten Verfahrensvariante im Bereich zwischen 10 und 1.000 µm (D₅₀, gemessen mittels Silikat). Weiter bevorzugt ist, dass die Korngröße zwischen 25 und 500 µm, weiter bevorzugt zwischen 50 und 200 µm liegt.

Bei der Mischeinrichtung handelt es sich bevorzugt um einen Zwangsmischer. Besonders bevorzugt sind Mischeinrichtungen, die einen hohen Scherenergieeintrag erreichen können. Die Stärke der Beschichtung kann neben dem Mengenanteil der Beschichtungszusammensetzung auch durch den Scherenergieeintrag gesteuert werden. In einer bevorzugten Verfahrensvariante wird der Scherenergieeintrag in Abhängigkeit von der Menge der eingesetzten Beschichtungszusammensetzung so ausgewählt, dass die Oberflächenbeschichtung mehrere µm stark ist.

Aufgrund der Zusammensetzung der Trägerpartikel aus einem Quarz und einem Schichtsilikat ergibt sich in einer bevorzugten Verfahrensvariante bereits aufgrund der unterschiedlichen Trägermaterialeigenschaften in Abhängigkeit von der lokalen Zusammensetzung eine unterschiedliche Benetzung mit der Beschichtungszusammensetzung. Dadurch kann gewährleistet werden, dass die Oberflächenbeschichtung sowohl mindestens einen hydrophilen als auch einen hydrophoben Bereich aufweist.

In Schritt e) erfolgt eine Temperaturbeaufschlagung der beschichteten Trägerpartikel. Bevorzugt erfolgt die Temperaturbeaufschlagung bei einer Temperatur zwischen 200 und 1.200 °C, bevorzugt zwischen 300 und 900 °C, weiter bevorzugt zwischen 400 und 800 °C und besonders bevorzugt zwischen 450 und 700 °C. Bei diesen Temperaturen erfolgt eine Umsetzung des Schichtsilikats beispielsweise in Form einer teilweisen oder vollständigen Kalzinierung.

Bei dieser Umsetzung des Schichtsilikats bilden sich sogenannte Stacks aus, welche unter anderem durch ihre Schichtstruktur eine hohe Lichtreflektion und somit hohe Brillanz und Leuchtkraft hervorrufen.

Je nach Einfallswinkel des auf die hydrophoben Bereiche (z.B. der oben erwähnten Stacks) auftreffenden Lichts kann es zu einer Totalreflexion des Lichts kommen. Von besonderer Bedeutung für die Totalreflexion über einen möglichst großen Winkelbereich ist das Reflexionsverhalten des hydrophoben Materials und/oder der Unterschied des Brechungsindex am Übergang zwischen dem den Partikel umgebenden Medium (z.B. Luft oder eine Kunstharzmatrix) und dem hydrophoben Material (z.B. dem jeweiligen Stack). Handelt es sich beispielsweise bei dem hydrophoben Material um eine Silberbeschichtung, kann an der Silberoberfläche eine Totalreflexion erfolgen, so dass der so beschichtete Effektpartikel als heller, glänzender Punkt (z.B. in einer Kunstharzmatrix) erscheint.

In einer bevorzugten Verfahrensvariante erfolgt nach der Temperaturbeaufschlagung eine weitere Scherkraftbeaufschlagung, wobei sich oberflächlich angeordnete Stacks lösen können und dabei eventuell daran anhaftende Oberflächenbeschichtung, wie beispielsweise Wasserglas, vom Composit-Partikel abgetragen wird. Wenn es notwendig ist und keine ausreichende Differenzierung zwischen oberflächenbeschichteten und nichtoberflächenbeschichteten Bereichen bzw. hydrophilen und hydrophoben Oberflächenbereichen gewährleistet werden kann, kann durch diese lokale Abtragung von Stacks in diesen Bereichen die gewünschte hohe Reflektion, Brillanz und Leuchtkraft des Composit-Partikels erreicht werden.

Insbesondere in einer Kunstharzmatrix entsteht an diesen Stellen ein deutlich silbrig glänzender metallischer Effekt. Ein derartiger Composit-Partikel kann somit in einer Kunstharzmatrix als Effektpartikel eingesetzt werden. Die sowohl hydrophile als auch hydrophobe Bereiche aufweisende Oberfläche gewährt gute Dispergierbarkeit in einer Kunstharzmatrix. Dadurch kann ein Aufschwimmen der Effektpartikel in der Kunstharzmatrix verhindert werden und eine gleichmäßige Verteilung im Kunstharz bis zu dessen Aushärtung - und als Folge davon somit auch im ausgehärteten Zustand - gewährleistet werden. Der hydrophile Quarzanteil lässt sich wie oben beschrieben mit beispielsweise anorganischen Pigmenten beschichten. Aufgrund der klar differenzierten Oberflächenbereiche weist ein solcher Composit-Partikel einen klaren Sparkling-Effekt auf, ohne dass es zu Farbverschiebungen oder Vergrauen des Hintergrundes kommt.

In einer bevorzugten Ausführungsform sind die Pigmente der Oberflächenbeschichtung farblich der Matrix angepasst. Dadurch kann eine Verfärbung der Kunstharzoberfläche verhindert werden. In diesem Fall ist nur der metallische Effekt der reflektierenden Bereiche (Stacks) erkennbar.

In einer bevorzugten Ausführungsform geht nur der hydrophile Bereich (z.B. der Quarz) eine Verbindung mit der Oberflächenbeschichtung (z.B. Natriumwasserglas) und einem Pigment ein.

Eine bevorzugte Anwendung für Composit-Partikel gemäß der vorliegenden Erfindung ist die Anwendung als Füllmaterial in Mineralguss- oder Verbundwerkstücken.

Ein weiterer wesentlicher Aspekt der vorliegenden Erfindung ist daher ein Mineralguss- oder Verbundwerkstück, welches Composit-Partikel gemäß der vorliegenden Erfindung umfasst. In einer bevorzugten Ausführungsform werden dazu Composit-Partikel gemäß der vorliegenden Erfindung Farbbandmischungen zugemischt, welche dann zur Herstellung eines Mineralguss- oder Verbundwerkstücks eingesetzt werden.

Als besonders vorteilhaft hat sich dabei die hohe Scherbeständigkeit der erfindungsgemäßen Composit-Partikel herausgestellt. Auch bei hoher Scherkraftbeaufschlagung werden diese Composit-Partikel nicht zerstört. Dies unterscheidet die erfindungsgemäßen Composit-Partikel wesentlich von herkömmlichen Effektpigmenten, welche bei hoher Scherkraftbeaufschlagung zerstört werden, sodass auch nicht pigmentbeschichtete Bereiche zum Vorschein kommen und zu einer Farbverschiebung oder einem Vergrauen des Hintergrunds führen. Herkömmliche Effektpigmente können bei Scherkraftbeaufschlagung auch vollständig aufgerieben werden so dass sie visuell nicht mehr erkennbar sind.

Zur Herstellung von Mineralguss- oder Verbundwerkstücken werden die Farbbandmischungen, welche erfindungsgemäß Composit-Partikel umfassen, beispielsweise mit flüssigem Polyester, Acryl oder Epoxidharzen gemischt. In einer bevorzugten Ausführungsform erfolgt dies in Rührkesseln, mit Mischschnecken. Die Drehzahl der Mischschnecken kann dabei bis zu 1.000 Umdrehungen pro Minute betragen. Im Gegensatz zu herkömmlichen Pigmenten, welche bei derart hohen Drehzahlen und dem entsprechend hohen Scherenergieeintrag zerstört würden, bleiben die erfindungsgemäßen Composit-Partikel intakt und werden äußerst homogen in der Matrix verteilt.

Bei dem Verbundwerkstück handelt es sich bevorzugt um eine Küchenspüle, eine Duschtasse, ein Waschbecken oder eine Badewanne. Wie bereits oben erwähnt kann ein Composit-Partikel auch rein mineralischen Zusammensetzungen beigefügt werden. Neben den oben genannten Mineralgussstücken können die erfindungsgemäßen Composit-Partikel auch als Effektpigmente in Fußböden, Fußbodenbelägen, Putzen, Wandfarben, Platten und ähnlichem eingesetzt werden. Es ist möglich, dass die Composit-Partikel gemäß der vorliegenden Erfindung in den genannten Anwendungen als optische Komponente bzw. Effektpartikel eingesetzt werden können. In diesen Anwendungen rufen sie einen deutlichen Sparkling-Effekt auf. Aufgrund der guten Dispergierbarkeit bleibt ein Effektpigment basierend auf einem Composit-Partikel gemäß der vorliegenden Erfindung während der Herstellung der oben genannten Verbundwerkstücke, Mineralgussstücke, Farben oder Lacke dauerhaft gleichmäßig verteilt. Insbesondere bei Mineralguss- oder Verbundwerkstücken schwimmen die erfindungsgemäßen Composit-Partikel nicht auf der Rückseite des Werkstückes auf, bevor es aushärtet.

Aufgrund der vergleichsweise kostengünstigen Ausgangsstoffe ist es möglich, die erfindungsgemäßen Composit-Partikel in einem sehr hohen Anteil als Füllstoff in Mineralguss- oder Verbundwerkstücken einzusetzen. Durch einen hohen Anteil der Composit-Partikel kann der Anteil an teuren Bindemitteln wie beispielsweise Harz reduziert werden. Es ist jedoch ebenfalls denkbar, Composit-Partikel gemäß der vorliegenden Erfindung lediglich als Additiv in anderen Füllstoffen einzusetzen. Aufgrund dieser unterschiedlichen Anwendungsmöglichkeiten und Mengenbereiche ist grundsätzlich der Einsatz der erfindungsgemäßen Composit-Partikel im Mengenbereich von 0,1 bis 99 Massenprozent bezogen auf das Gesamtgewicht eines Mineralguss- oder Verbundwerkstücks denkbar. Insbesondere dann, wenn hohe Füllstoffgrade erwünscht sind, ist es jedoch vorteilhaft, wenn weitere Füllstoffe verwendet werden. In einer besonders bevorzugten Ausführungsform weist ein Mineralguss- oder Verbundwerkstück daher einen Massenanteil der erfindungsgemäßen Composit-Partikel im Bereich von 1 bis 50 %, bevorzugt 2 bis 40 % auf.

Weitere Vorteile, Ziele und Eigenschaften der vorliegenden Erfindung werden anhand nachfolgender Beschreibung anliegender Figuren erläutert, in welchen eine beispielhafte Ausführungsform der vorliegenden Erfindung dargestellt ist. Komponenten, welche in den Figuren wenigstens im Wesentlichen hinsichtlich ihrer Funktion übereinstimmen, können hierbei mit gleichem Bezugszeichen gekennzeichnet sein, wobei diese Komponenten nicht in jedem Fall gekennzeichnet und erläutert sein müssen.

In den Figuren zeigt
- Figur 1: Eine schematische Darstellung einer ersten Ausführungsform eines Composit-Partikels mit hydrophilen und hydrophoben Oberflächenbereichen und deren Wechselwirkung mit einfallendem Licht,
- Figur 2: Eine Darstellung eines Verbundwerkstoffs, welcher Composit-Partikel gemäß der vorliegenden Erfindung enthält.

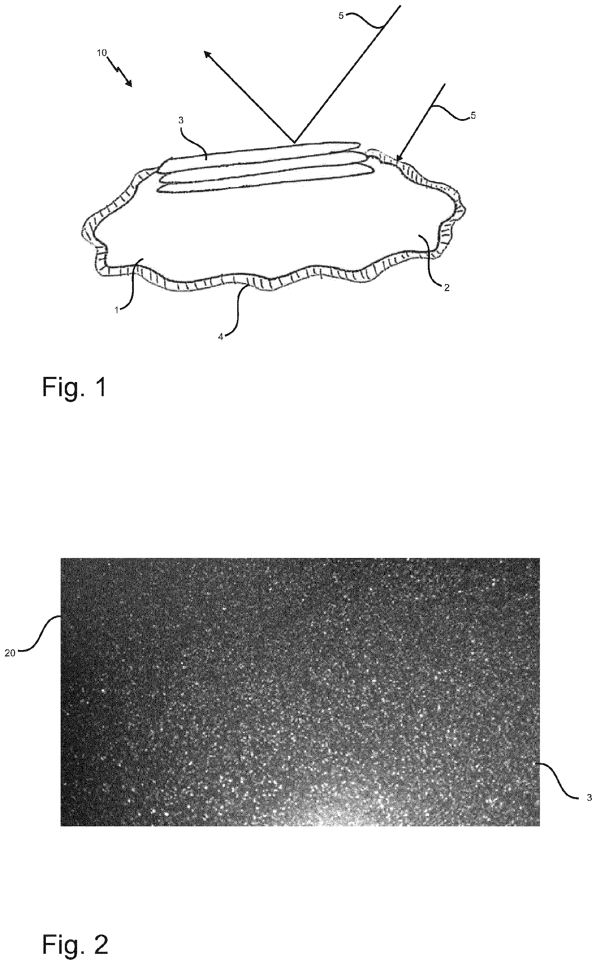

Figur 1 zeigt eine erste Ausführungsform eines Composit-Partikels 10. Gezeigt ist der Trägerpartikel 1, welcher zwei voneinander getrennte Bereiche aufweist. Der im gezeigten Beispiel größere Bereich 2 besteht aus Quarz und ist hydrophil. Der im gezeigten Beispiel kleinere Bereich 3 besteht aus einem Schichtsilikat. Dieses weist hydrophobere Eigenschaften auf. Bei einer Beschichtung mit einer hydrophilen Oberflächenbeschichtung 4 lagert sich diese auf den hydrophilen Oberflächenbereichen des Quarzes 2 ab. Die Oberflächenbeschichtung 4 kann auch nicht gezeigte Pigmente enthalten.

Aufgrund der unterschiedlichen Oberflächeneigenschaften unterscheiden sich die hydrophilen und hydrophoben Oberflächenbereiche hinsichtlich deren Streu- und Reflektionsverhalten für Licht. Während das hydrophobere Schichtsilikat 3 insbesondere nach einer thermischen Behandlung beispielsweise einer Kalzinierung aufgrund der Ausbildung von Stacks Licht nahezu vollständig reflektiert, streut die auf den hydrophilen Bereichen 2 angeordnete Oberflächenbeschichtung 4, z.B. Wasserglas, eintreffendes Licht diffus.

Bei Vorhandensein von Pigmenten in dieser Oberflächenbeschichtung 4 werden bestimmte Wellenlängen aus dem einfallenden Licht absorbiert, sodass das gestreute Licht eine definierte Farbe aufweist. Aufgrund des diffus gestreuten und des teilweise absorbierten Lichts erscheinen die Bereiche der Composit-Partikel, auf welchen die Oberflächenbeschichtung 4 angeordnet ist, dunkler als diejenigen Bereiche, in denen das hydrophobere Schichtsilikat 3 oberflächlich angeordnet ist. In diesen Bereichen erfolgt in Abhängigkeit von der Lage der einzelnen Stacks eine vollständige Reflektion des einfallenden Lichts, sodass bei der entsprechenden Lage des Composit-Partikels relativ zu der Lichtquelle und dem Auge eines Betrachters eine vollständige Reflektion auftritt und diese Bereiche besonders hell erscheinen. Da dieser Effekt auch in einer Bindemittelmatrix, wie beispielsweise einer Kunstharzmatrix auftritt, erscheinen diese Bereiche als besonders helle oder sogar glitzernde Stellen im Verbundwerkstoff. Auch in Lacken oder Wandfarben können derartige Glitzereffekte erreicht werden.

Figur 2 zeigt eine Darstellung eines Verbundwerkstoffs 20, welcher Composit-Partikel (nicht in ihrer gesamtheit erkennbar) gemäß der vorliegenden Erfindung enthält. Die Harzmatrix des Verbundwerkstoffs 20 ist schwarz eingefärbt. Vor diesem schwarzen Hintergrund sind die darein eingebetteten Composit-Partikel deutlich als helle Punkte zu erkennen. Die Composit-Partikel reflektieren einfallendes Licht auf bestimmten Oberflächenbereichen 3 (nämlich den hydrophoben Bereichen des Trägerpartikels) aufgrund der dort angeordneten Beschichtung vollständig. Abhängig von der Größe dieser Oberflächenbereiche 3 der Composit-Partikel, der Tiefe des jeweiligen Composit-Partikels in dem Verbundwerkstoff 20 und dem Einfallswinkel des auftreffenden Lichts (in diesem Fall maßgeblich durch den Blitz der Kamera beeinflusst), erscheinen die im Verbundwerkstoff 20 auftretenden Reflexe unterschiedlich hell.

### Beispiel

Für die Herstellung eines Verbundwerkstoffs, wie er beispielsweise in Figur 2 gezeigt ist und welcher beispielsweise zur Herstellung von Küchenspülen genutzt werden kann, werden Mischungen basierend auf Farbquarzen bereitgestellt. Durch die hohe Scherbeständigkeit des Composit-Partikels können zum einen die hohen Scherenergien des Zwangsmischers überstanden werden, zum anderen werden die beschichteten Partikel aufgrund der verstärkenden Beschichtung und des daraus resultierenden höheren Gewichts nicht von den Entstaubungsanlagen abgesaugt. Es können durch die einwandfreie Verarbeitbarkeit dem Kunden komplette Mischungen bereitgestellt werden. Diese Mischungen können gezielt in einer Gießmaschine verarbeitet ohne in der Mischschnecke zerstört zu werden.

Zur Herstellung eines solchen Composit-Partikels wird das Rohmaterial in einen Zwangsmischer vorgelegt. Im trockenen Zustand werden 1 Ma-% eines silberfarbenen Pigments zugegeben und diese für eine Minute in das Rohmaterial eingemischt. Danach werden 3 Ma-% eines Natriumwasserglases zugegeben und nochmals für mindestens 3 Minuten gemischt. Hierbei legt sich das hydrophile Bindemittel mitsamt des Pigments bevorzugt auf die hydrophilen Oberflächenteile. Dieses feuchte Rohmaterial wird nun in einen Drehrohrofen überführt und mit einer Mindestaufenthaltsdauer von 20 Minuten teilweise kalziniert.

Zur Herstellung eines solchen Verbundwerkstoffs werden Farbquarze verschiedener Körnungen in schwarz mit 10 Ma-% eines partiell silbern beschichteten Composit-Partikels gemischt. Dieses Gemisch wird in einer Gießmaschine mit einem Kunstharzanteil von 30 Ma-% gegossen und anschließend zur Aushärtung gebracht. Die Füllstoffzusammensetzung für einen solchen Verbundwerkstoff umfasst
90 Ma-% Farbquarz schwarz einer Körnung von 0,1-0,3 mm und
10 Ma- % Compositpartikel silber.

Diese werden mit einer Harzmatrix vermengt, so dass die sich eine Zusammensetzung der nicht ausgehärteten Rohmasse wie folgt ergibt:
70 Ma-% der oben beschriebenen Quarzmischung (1)
30 Ma-% ungesättigtes Polyesterharz
2,0 Ma-% Härter

Nach innigem Vermischen unter Einbringen starker Scherkräfte kann nach dem Abguss eine Verbundwerkstoffoberfläche erreicht werden, wie Sie in Figur 2 dargestellt ist.

### Bezugszeichenliste

- 1: Trägerpartikel
- 2: größerer Bereich aus Quarz
- 3: kleinerer Bereich aus Schichtsilikat
- 4: hydrophile Oberflächenbeschichtung
- 10: Composit-Partikel
- 20: Verbundwerkstoff

## Patentansprüche

1. Composit-Partikel, umfassend einen Trägerpartikel und eine mindestens partielle Oberflächenbeschichtung,
**dadurch gekennzeichnet, dass**
der Trägerpartikel ein Quarz und ein Schichtsilikat umfasst und die Oberfläche des Composit-Partikels mindestens einen hydrophilen und mindestens einen hydrophoben Bereich aufweist.

2. Composit-Partikel nach Anspruch 1,
**dadurch gekennzeichnet, dass**
im Trägerpartikel Quarz und Schichtsilikat miteinander verwachsen vorliegen.

3. Composit-Partikel nach einem der vorangegangenen Ansprüche,
**dadurch gekennzeichnet, dass**
der hydrophile Bereich der Oberfläche des Composit-Partikels eine hydrophile Oberflächenbeschichtung aufweist, die ein Wasserglas oder dessen Folgeprodukt umfasst.

4. Composit-Partikel nach einem der vorangegangenen Ansprüche,
**dadurch gekennzeichnet, dass**
das Schichtsilikat eine Zusammensetzung des Typs Dodₙ Hex₂₋₃ [Tet₄ O₁₀] X₂ • m H₂O aufweist, wobei "Dod" 12-fach koordinierte Kationen sind, "Hex" 6-fach koordinierte Kationen sind, "Tet" 4-fach koordinierte Kationen sind und "X" Anionen sind, "n" im Bereich von 0,35 bis 1 liegt und "m" im Bereich von 0 bis 24 liegt.

5. Composit-Partikel nach einem der vorangegangenen Ansprüche,
**dadurch gekennzeichnet, dass**
er eine Korngröße (D₅₀, Sedigraph) zwischen 10 und 1000 µm, bevorzugt zwischen 25 und 500 µm, besonders bevorzugt zwischen 50 und 200 µm aufweist.

6. Composit-Partikel nach einem der vorangegangenen Ansprüche,
**dadurch gekennzeichnet, dass**
die hydrophile Oberflächenbeschichtung in einem Massenanteil von unter 10 %, bevorzugt unter 8 % und besonders bevorzugt zwischen 0,1 - 5 % bezogen auf die Gesamtmasse des Composit-Partikels vorliegt.

7. Composit-Partikel nach einem der vorangegangenen Ansprüche,
**dadurch gekennzeichnet, dass**
die Oberflächenbeschichtung ein Pigment umfasst, welches bevorzug in einem Massenanteil von unter 5 %, weiter bevorzugt unter 4 % und besonders bevorzugt zwischen 0,01 - 3 % bezogen auf die Gesamtmasse des Composit-Partikels vorliegt.

8. Verfahren zur Herstellung von Composit-Partikeln, deren Oberfläche mindestens einen hydrophilen und mindestens einen hydrophoben Bereich aufweist,
umfassend die Schritte:
a) Bereitstellen von Trägerpartikeln, umfassend ein Quarz und ein Schichtsilikat,
b) Einführen der Trägerpartikel in eine Mischeinrichtung,
c) Beaufschlagen der Trägerpartikel mit einer Beschichtungszusammensetzung,
d) Beschichten der Trägerpartikel mit der Beschichtungszusammensetzung durch Vermischen der Trägerpartikel mit der Beschichtungszusammensetzung unter Scherenergieeintrag,
e) Temperaturbeaufschlagung der beschichteten Trägerpartikel.

9. Verfahren zur Herstellung von Composit-Partikeln nach Anspruch 8,
**dadurch gekennzeichnet, dass**
Schritt e) bei einer Temperatur zwischen 200 und 1200°C, bevorzugt zwischen 400 und 900°C, besonders bevorzugt zwischen 650 und 850°C durchgeführt wird, bevorzugt in einem Drehrohrofen.

10. Mineralguss- oder Verbundwerkstück,
**dadurch gekennzeichnet, dass**
es Composit-Partikel gemäß einem der Ansprüche 1 - 7 umfasst.

## Claims

1. Composite particle, comprising a carrier particle and an at least partial surface coating,
**characterised in that**
the carrier particle comprises a quartz and a layered silicate, and the surface of the composite particle has at least one hydrophilic region and at least one hydrophobic region.

2. Composite particle according to claim 1,
**characterised in that**
quartz and layered silicate are present, grown together, in the carrier particle.

3. Composite particle according to any of the preceding claims,
**characterised in that**
the hydrophilic region of the surface of the composite particle has a hydrophilic surface coating comprising a soluble glass or the secondary product thereof.

4. Composite particle according to any of the preceding claims,
**characterised in that**
the layered silicate has a composition of the type Dodₙ Hex₂₋₃ [Tet₄ O₁₀] X₂ • m H₂O where "Dod" are 12-times coordinated cations, "Hex" are 6-times coordinated cations, "Tet" are 4-times coordinated cations and "X" are anions, "n" is within a range of from 0.35 to 1 and "m" is within a range of from 0 to 24.

5. Composite particle according to any of the preceding claims,
**characterised in that**
it has a grain size (D₅₀, sedigraph) of between 10 and 1000 µm, preferably between 25 and 500 µm, particularly preferably between 50 and 200 µm.

6. Composite particle according to any of the preceding claims,
**characterised in that**
the hydrophilic surface coating is present in a mass percentage of less than 10 %, preferably less than 8 % and particularly preferably between 0,1 - 5 %, based on the total mass of the composite particle.

7. Composite particle according to any of the preceding claims,
**characterised in that**
the surface coating comprises a pigment which is preferably present in a mass percentage of less than 5 %, more preferably less than 4 % and particularly preferably between 0,01 - 3 %, based on the total mass of the composite particle.

8. Method for producing composite particles, the surface of the composite particles has at least one hydrophilic region and at least one hydrophobic region,
comprising the steps:
a) providing carrier particles, comprising a quartz and a layered silicate,
b) introducing the carrier particles into a mixing device,
c) charging the carrier particles with a coating composition,
d) coating the carrier particles with the coating composition by mixing the carrier particles with the coating composition, with the introduction of shear energy,
e) subjecting the coated carrier particles to temperature.

9. Method for producing composite particles according to claim 8,
**characterised in that**
step e) is carried out at a temperature of between 200 and 1200°C, preferably between 400 and 900°C, particularly preferably between 650 and 850°C, preferably in a rotary kiln.

10. Mineral cast part or composite workpiece,
**characterised in that**
it comprises composite particles according to any of claims 1 - 7.

## Revendications

1. Particules composites, comprenant une particule support et un revêtement superficiel au moins partiel, **caractérisées en ce que** la particule support comprend un quartz et un phyllosilicate, et la surface de la particule composite présente au moins un domaine hydrophile et au moins un domaine hydrophobe.

2. Particules composites selon la revendication 1, **caractérisées en ce que** le quartz et le phyllosilicate sont entremêlés dans la particule support.

3. Particules composites selon l'une des revendications précédentes, **caractérisées en ce que** le domaine hydrophile de la surface de la particule composite présente un revêtement superficiel hydrophile, qui comprend une solution silicatée ou un dérivé de celle-ci.

4. Particules composites selon l'une des revendications précédentes, **caractérisées en ce que** le phyllosilicate présente une composition du type Dodₙ Hex₂₋₃ [Tet₄ O₁₀] X₂. mH₂O, dans laquelle "Dod" représente des cations dodécacoordonnés, "Hex" des cations hexacoordonnés, "Tet" des cations tétracoordonnés et "X" des anions, "n" étant compris dans la plage de 0,35 à 1 et "m" étant compris dans la plage de 0 à 24.

5. Particules composites selon l'une des revendications précédentes, **caractérisées en ce qu'**elles présentent une granulométrie (D₅₀, Sedigraph) comprise entre 10 et 1000 µm, de préférence entre 25 et 500 µm, d'une manière particulièrement préférée entre 50 et 200 µm.

6. Particules composites selon l'une des revendications précédentes, **caractérisées en ce que** le revêtement superficiel hydrophile est présent selon une proportion en masse inférieure à 10 %, de préférence inférieure à 8 % et d'une manière particulièrement préférée comprise entre 0,1 et 5 % par rapport à la masse totale de la particule composite.

7. Particules composites selon l'une des revendications précédentes, **caractérisées en ce que** le revêtement superficiel comprend un pigment qui est présent de préférence selon une proportion en masse inférieure à 5 %, plus particulièrement inférieure à 4 % et d'une manière particulièrement préférée comprise entre 0,01 et 3 % par rapport à la masse totale de la particule composite.

8. Procédé de fabrication de particules composites dont la surface présente au moins un domaine hydrophile et au moins un domaine hydrophobe, comprenant les étapes suivantes :
a) fourniture de particules supports, comprenant un quartz et un phyllosilicate,
b) introduction des particules supports dans un dispositif mélangeur,
c) application d'une composition de revêtement sur les particules supports,
d) revêtement des particules supports avec la composition de revêtement par mélange des particules supports avec la composition de revêtement en présence d'un apport d'énergie de cisaillement,
e) application d'une température aux particules supports revêtues.

9. Procédé de fabrication de particules composites selon la revendication 8, **caractérisé en ce que** l'étape e) est mise en oeuvre à une température comprise entre 200 et 1200 °C, de préférence entre 400 et 900 °C, d'une manière particulièrement préférée entre 650 et 850 °C, de préférence dans un four tubulaire rotatif.

10. Pièce en fonte minérale ou composite, **caractérisée en ce qu'**elle comprend des particules composites selon l'une des revendications 1 à 7.
